**Europäisches Patentamt**

**European Patent Office**

**Office européen des brevets**

(19)

(11) Veröffentlichungsnummer : **0 191 079 B1**

(12) **EUROPÄISCHE PATENTSCHRIFT**

(45) Veröffentlichungstag der Patentschrift :
**15.03.89**

(51) Int. Cl.⁴ : **G 02 B 26/04, F 41 G 7/26**

(21) Anmeldenummer : **85904233.5**

(22) Anmeldetag : **29.08.85**

(86) Internationale Anmeldenummer :
**PCT/DE 85/00293**

(87) Internationale Veröffentlichungsnummer :
**WO/8601612 (13.03.86 Gazette 86/06)**

(54) **PROJEKTIONSEINRICHTUNG FÜR EINEN LEITSTRAHL.**

(30) Priorität : **29.08.84 DE 3431824**

(43) Veröffentlichungstag der Anmeldung :
**20.08.86 Patentblatt 86/34**

(45) Bekanntmachung des Hinweises auf die Patenterteilung : **15.03.89 Patentblatt 89/11**

(84) Benannte Vertragsstaaten :
**AT BE CH DE FR GB IT LI LU NL SE**

(56) Entgegenhaltungen :
**GB–A– 2 016 182**
**GB–A– 2 104 648**
**US–A– 3 690 594**
**G. Schöder: "Technische Optik" 4. Auflage, Vogel Verlag Würzburg 1984, Seiten 179, 180**

(73) Patentinhaber : **Optische Werke G. Rodenstock**
**Isartalstrasse 43**
**D-8000 München 5 (DE)**

(72) Erfinder : **SKROBOL, Christian**
**Leitenstr. 14**
**D-8084 Inning/A (DE)**
Erfinder : **ROTHE, Ernst**
**Hildebrandstr. 13**
**D-8000 München 19 (DE)**

(74) Vertreter : **Steinmann, Otto C. et al**
**Kanzlei Münich, Steinmann, Schiller Willibaldstrasse 36**
**D-8000 München 21 (DE)**

## Beschreibung

### Technisches Gebiet

Die Erfindung bezieht sich auf eine Projektionseinrichtung für einen Leitstrahl gemäß dem Oberbegriff des Patentanspruchs 1.

Derartige Projektionseinrichtungen werden beispielsweise für die Steuerung Von ferngelenkten Flugkörpern, wie Raketen, landenden oder startenden Flugzeugen etc. benötigt.

### Stand der Technik

Projektionseinrichtungen der im Oberbegriff des Patentanspuchs 1 zugrunde gelegten Art sind beispielsweise aus der US-A 3 690 594 oder der US-A 4 014 482 bekannt. Derartige Projektionseinrichtungen weisen ein Objektiv auf, das einen Teilbereich eines um eine Drehachse rotierenden Siemenssterns in den Raum projiziert, in dem sich das zu lenkende Objekt, also beispielsweise die Rakete bewegt. Dabei rotiert die Drehachse des Siemenssterns um die optische Achse des Leitstrahls. Der abgebildete Teilbereich des Siemenssterns wird in der Regel von einer kohärenten Lichtquelle, beispielsweise einem Laser beleuchtet.

Durch diese Anordnung ist die Modulationsfrequenz in einer Ebene senkrecht zu der optischen Achse des Objektivs ortsabhängig, so daß das zu leitende Objekt aus der Modulationsfrequenz seine Lage in dieser Ebene ermitteln kann. Die Abweichung der gemessenen Modulationsfrequenz von einer Sollfrequenz kann dann als Steuergröße für eine Korrektur-Lenkbewegung verwendet werden.

Bei den im Oberbegriff des Patentanspruchs 1 vorausgesetzten Projektionseinrichtungen wird zum Aufbringen der Modulationsfrequenz auf den abgebildeten Lichtstrahl ein Siemensstern verwendet, bei dem die Radialstrahlen abwechselnd für das Beleuchtungslicht durchlässig bzw. völlig undurchlässig sind.

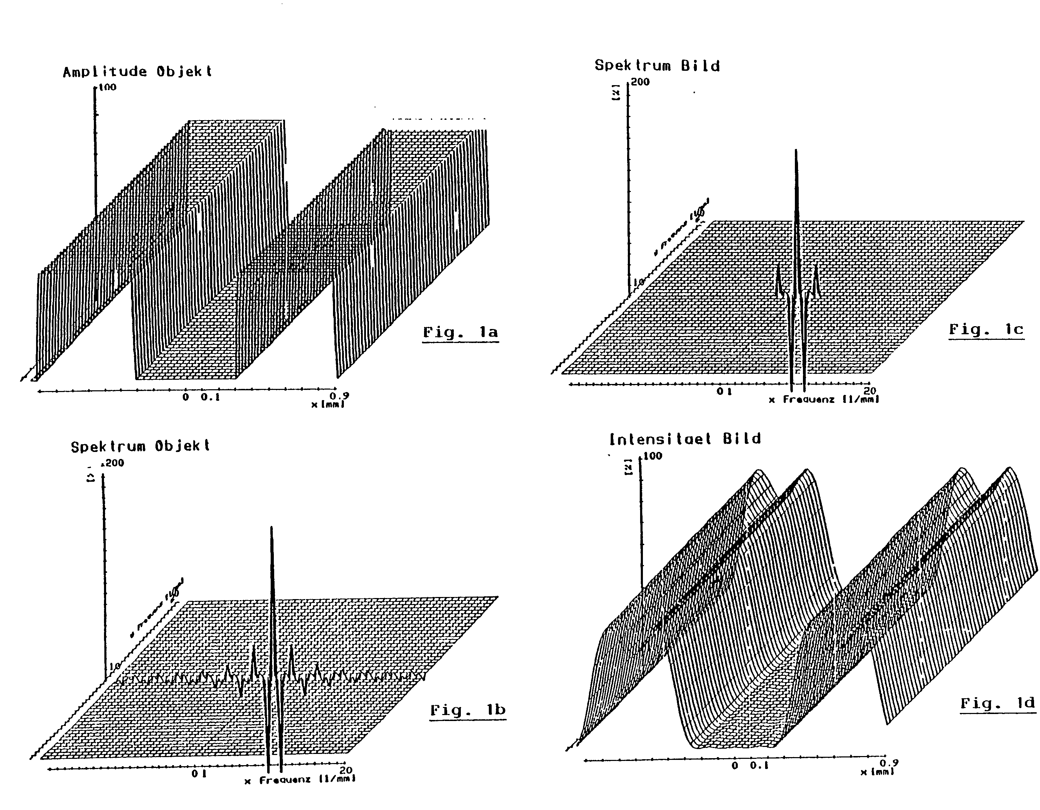

Fig. 1a zeigt die Amplitudenverteilung des modulierten Lichtstrahls, die sich bei einer Spaltbreite von 0,6 mm ergibt, wobei die Breite des beleuchteten Teilbereichs des Siemenssterns eine Vielfaches sein kann.

Die Modulation, d. h. das Zerhacken des Lichtstrahls durch die völlig undurchlässigen Streifen des Siemenssterns führt zu einer annähernd rechteckförmigen Amplitudenverteilung, der das in Fig. 1b dargestellte Ortsfrequenzspektrum entspricht. Dieses Ortsfrequenzspektrum kann leicht beispielsweise mittels einer Fouriertransformation bestimmt werden.

Andererseits ist die Übertragungsfunktion des Objektivs beschränkt, typischerweise hat sie einen Wert von 6 Linien/mm.

Bildet man das in Fig. 1b dargestellte Ortsfrequenzspektrum mittels eines derartigen Objektivs ab, so erhält man das in Fig. 1c dargestellte Ortsfrequenzspektrum hinter dem Objektiv im «Bildraum», in dem sich das zu leitende Objekt, beispielsweise der Flugkörper bewegt.

Zu diesem «beschränkten» Ortsfrequenzspektrum gehört die in Fig. 1d dargestellte Intensitätsverteilung.

Wie man dieser Figur entnimmt, weist die Intensitätsverteilung keine Einzelmaxima, sondern Doppelmaxima auf, so daß sich unter Umständen Fehler bei der Bestimmung der an einer speziellen Stelle vorliegenden «Modulationsfrequenz» ergeben können, die die Leitfunktion der Leiteinrichtung zumindest beeinträchtigen kann.

Eine Leiteinrichtung anderer Gattung, bei der ebenfalls ein Siemensstern und zwar am Empfänger des Leitstrahls verwendet wird, ist in der US-PS 3 002 098 beschrieben. Bei derartigen Leiteinrichtungen können ähnliche Probleme wie vorstehend geschildert auftreten.

### Darstellung der Erfindung

Der Erfindung liegt die Aufgabe zugrunde, eine Projektionseinrichtung fur einen Leitstrahl gemäß dem Oberbegriff des Patentanspruchs 1 derart weiterzubilden, daß nach Abbildung mit dem Projektionsobjektiv in jedem Fall einfache Maxima der Ampltuden- bzw. Intensitätsverteilung auftreten, die eine sichere Frequenzbestimmung erlauben.

Diese Aufgabe wird erfindungsgemäß dadurch gelöst, daß von einer Projektionseinrichtung für einen Leitstrahl gemäß dem Oberbegriff des Patentanspruchs 1 ausgegangen und diese Projektionseinrichtung gemäß dem kennzeichnenden Teil des Patentanspruchs weitergebildet wird.

Erfindungsgemäß ist erkannt worden, daß es für eine Intensitätsverteilung im Bildraum mit einfachen Maxima erforderlich und andererseits auch hinreichend ist, daß außer der nullten und ersten Ordnung im Frequenzspektrum keine höheren Ordnungen und insbesondere nicht die zweite, dritte, vierte und fünfte Ordnung im wesentlichen Umfang auftreten. Das Auftreten noch höherer Ordnungen als der fünften Ordnung ist unschädlich, da diese Ordnungen aufgrund der beschränkten Frequenz-Übertragungsfunktion des Objektivs nur abgeschwächt bzw. bei kohärenten Lichtstrahlen überhaupt nicht übertragen werden.

Erfindungsgemäß ist weiter erkannt worden, daß es hierzu erforderlich ist, daß die Trennkanten zwischen den für den Lichtstrahl undurchlässigen, d. h. beispielsweise den Lichtstrahl absorbierenden oder reflektierenden Teilen des Siemenssterns und den für den Lichtstrahl durchlässigen Teilen graduell verlaufend ausgebildet sind. Hierdurch erhält man ein Frequenzspektrum nach dem Siemensstern, bei dem praktisch keine zweiten, dritten, vierten und fünften Ordnungen auftreten. Hierbei ist insbesondere zu berücksichtigen, daß gemäß der Erfindung mit Laserlicht, also kohärentem Licht gearbeitet wird. Insbesondere dann, wenn der graduelle Verlauf der Trennkanten sinusförmig ausgebildet ist, werden alle höheren Ordnungen als die erste Ordnung streng unterdrückt. Dies ist zwar im allgemeinen Stand der Technik bereits bekannt — vergleiche beispielsweise das Lehrbuch « Technische Optik » von Gottfried Schröder, 4. Auflage, Seite 179/180, — für Projektionseinrichtungen gemäß dem Oberbegriff des Patentanspruchs 1 sind derartige graduelle Verläufe bislang aber noch nicht in Betracht gezogen worden. Dies dürfte unter anderem folgende Gründe haben :

Zum einen ist bereits in der genannten Literaturstelle angegeben, daß derartige « Sinusgitter » schwer herstellbar sind, zum anderen wird für Leitstrahlen beispielsweise von Raketen bevorzugt Licht mit Wellenlängen im langwelligen Infrarot verwendet. Dabei kommen aus Intensitätsgründen häufig $CO_2$-Laser zum Einsatz. Diese Laser haben eine derart hohe Intensität, daß teildurchlässige Gebiete des Modulationsmusters sehr stark aufgeheizt werden, was unter Umständen das Modulationsmuster und/oder das Trägermaterial, auf dem das Muster des Siemenssterns aufgebracht wird, beschädigen könnte.

Deshalb wird erfindungsgemäß vorgeschlagen, den graduellen Verlauf durch ein (zweites) in radialer Richtung verlaufendes Modulationsmuster nachzubilden, dessen Ortsfrequenz wesentlich höher als die Ortsfrequenz des Siemenssterns, d. h. des ersten Modulationsmusters ist.

Dieses zweite Modulationsmuster kann die verschiedensten Formen haben, wobei in den Ansprüchen 2 bis 5 besonders bevorzugte Formen gekennzeichnet sind : Beispielsweise kann das zweite Modulationsmuster gemäß Anspruch 2 sägezahnbzw. gemäß Anspruch 3 trapezförmig sein. Ferner kann das zweite Modulatonsmuster einen verschiedenen Winkelfunktionen folgenden Verlauf haben.

Kurze Beschreibung der Zeichnung

Die Erfindung wird nachstehend anhand eines Ausführungsbeispiels unter Bezugnahme auf die Zeichnung näher beschrieben, in der zeigen :

Fig. 2a den Aufbau einer erfindungsgemäßen Projektionseinrichtung für einen Leitstrahl,

Fig. 2b einen Ausschnitt aus dem in Fig. 2a verwendeten erfindungsgemäß ausgebildeten « Siemensstern »,

Fig. 3a bis 3d die sich bei einer Projektionseinrichtung gemäß Fig. 2 ergebenden Verteilungen, wenn das zusätzliche Modulationsmuster des Siemenssterns « dreiecksförmig » ist, und

Fig. 4a bis 4d die sich bei einer Projektionseinrichtung gemäß Fig. 2 ergebenden Verteilungen, wenn das zusätzliche Modulationsmuster trapezförmige Bestandteile aufweist.

Darstellung bevorzugter Ausführungsbeispiele

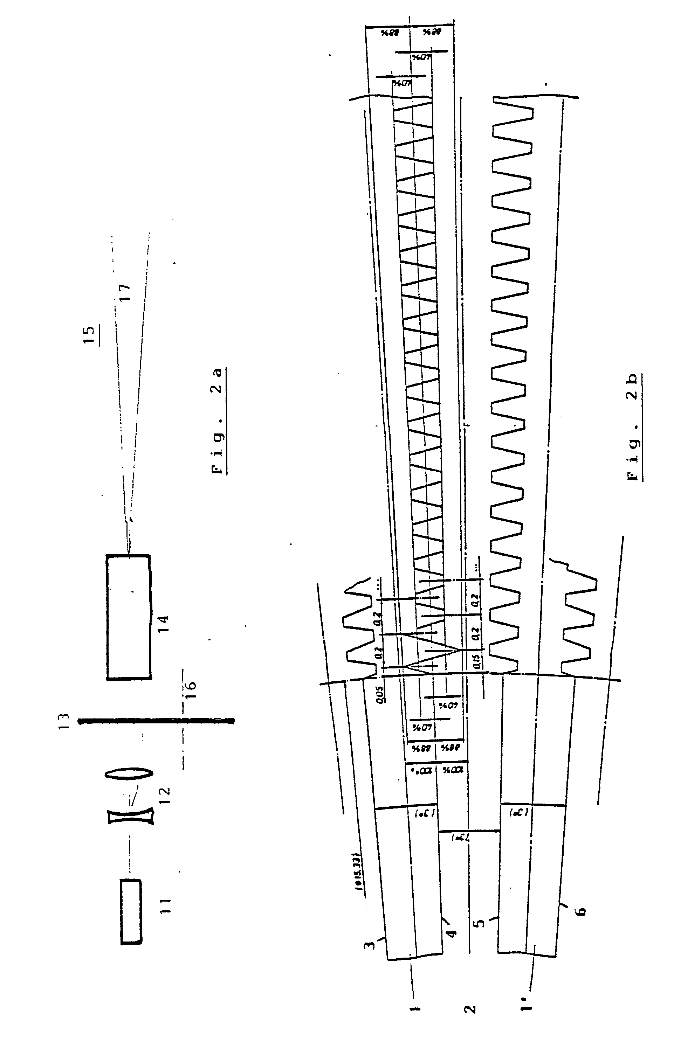

Fig. 2 zeigt einen Ausschnitt aus einer erfindungsgemäßen Projektioneinrichtung. Die Projektionseinrichtung weist eine kohärentes Licht abgebende Lichtquelle 11, also beispielsweise einen Laser auf. Eine Aufweitoptik 12, die nur schematisch dargestellt ist, weitet den Strahl der Lichtquelle 11 derart auf, daß er einen genau begrenzten Teilbereich eines Siemenssterns 13 beleuchtet. Dieser Teilbereich kann gegebenenfalls durch Blenden etc., die nicht im einzelnen dargestellt sind, begrenzt sein und wird mittels eines Objektivs 14 in einen Raum 15 abgebildet, in dem sich ein nicht näher dargestelltes zu lenkendes Objekt, beispielsweise ein Flugkörper wie eine Luftabwehrrakete, ein landendes Flugzeug etc. bewegt. Der Siemensstern 13 ist in an sich bekannter Weise ein sternförmiges Gebilde, das abwechselnd lichtundurchlässige Radialstreifen 1, 1' (vergl. Fig. 2b) und lichtdurchlässige Streifen 2 bzw. Strahlen aufweist.

Der Siemensstern 13 wird um eine Achse 16 gedreht, die nicht mit der optischen Achse 17 des Objektivs 14 zusammenfällt. Darüberhinaus kann die Drehachse 16 des Siemenssterns auch gegenüber der Rotationsachse des rotationssymmetrischen Siemenssterns parallel verschoben sein. Ferner rotiert die Drehachse 16 des Siemenssterns um die optische Achse 17 des Objektivs 14.

Bei dem in Fig. 2b dargestellten Ausführungsbeispiel des Siemenssterns erstrecken sich die für das Licht nicht durchlässigen, also beispielsweise das Licht absorbierenden radialen Streifen 1, 1' etc. und die für das Licht durchlässigen radialen Streifen 2, ... jeweils über einen Winkelbereich von 3°. An den Trennkanten 3, 4, 5 und 6 zwischen den einzelnen Bereichen ist eine zusätzliche Modulationsanordnung vorgesehen. In Fig. 2b sind zwei Möglichkeiten für die zweite Modulationsanordnung dargestellt, nämlich ein trapezförmiger und ein dreieckiger Verlauf.

Bei dem gezeigten Ausführungsbeispiel beträgt die Trapezhöhe 40 % des halben Abstandes zwischen den Trennkanten, während die Dreieckshöhe 88 % des halben Abstands beträgt.

Die Periodenlänge des zweiten Modulationsmusters ist 0,2mm, während die mittlere Spaltbreite in dem genutzten Teil des Siemenssterns, d. h. im beleuchteten Bereich etwa 0,6mm beträgt.

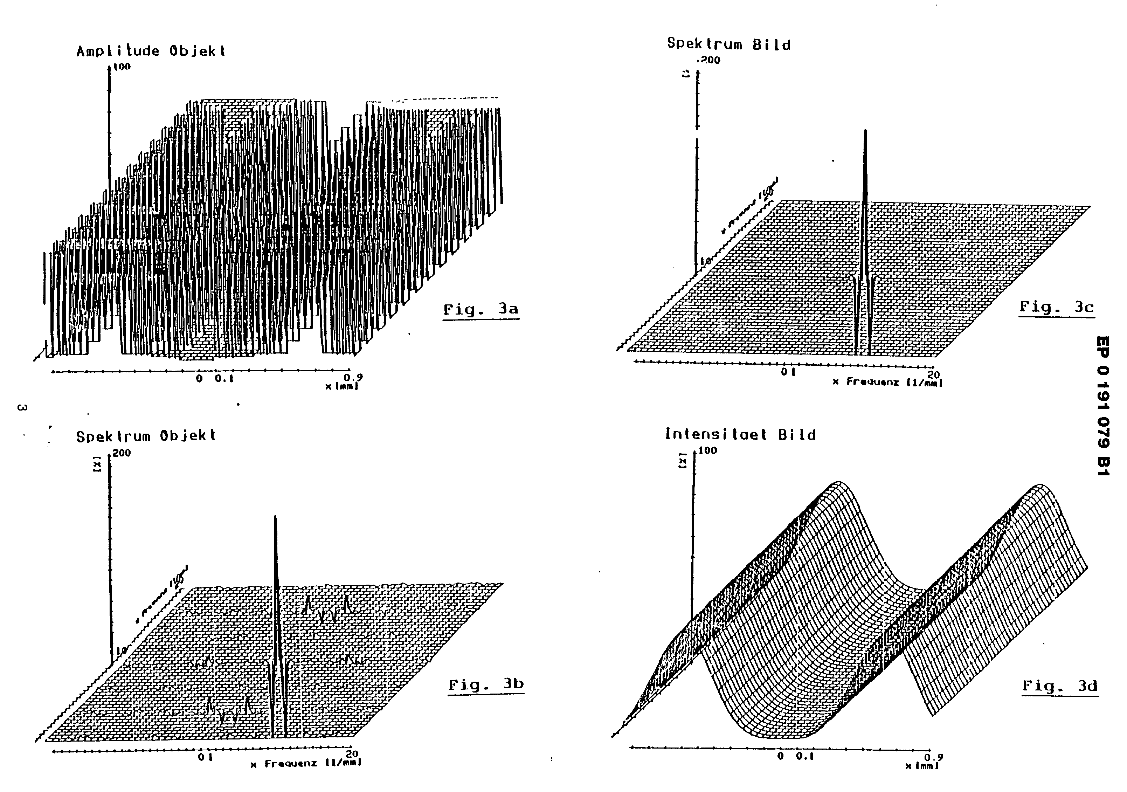

Fig. 3 zeigt die verschiedenen Verteilungen, die man mit der in Fig. 2a dargestellten Projektionseinrichtung erhält, wenn man einen Siemensstern verwendet, bei dem die Trennkanten gemäß Fig. 2b dreieckig mit einer Höhe von 88 % des halben Abstandes als zusätzliches Modulationsmuster ausgebildet sind.

Fig. 3a zeigt die Amplitudenverteilung des modulierten Lichtstrahls im Objektraum, d. h. unmittelbar hinter dem Siemensstern 13, bzw. vor dem Objektiv 14.

Fig. 3b zeigt das zugehörige Ortsfrequenzspektrum, das man beispielsweise mittels Fouriertransformation erhält. Überträgt man dieses Frequenzspektrum mit einem Objektiv, dessen Übertragungsfunktion in geeigneter Weise frequenzbeschränkt ist, so erhält man in dem Raum 15 an einer bestimmten Stelle beispielsweise das in Fig. 3c dargestellte Ortsfrequenzspektrum, bei dem nur noch die nullte und erste Ordnung auftreten.

Dieses Ortsfrequenzspektrum gemäß Fig. 3c führt zu dem in Fig. 3d dreidimensional dargestellten Intensitätsspektrum, das deutlich erkennbare Einzelmaxima hat, so daß die Frequenzbestimmung aus dem Intensitäts- bzw. Amplitudenverlauf kein Problem ist.

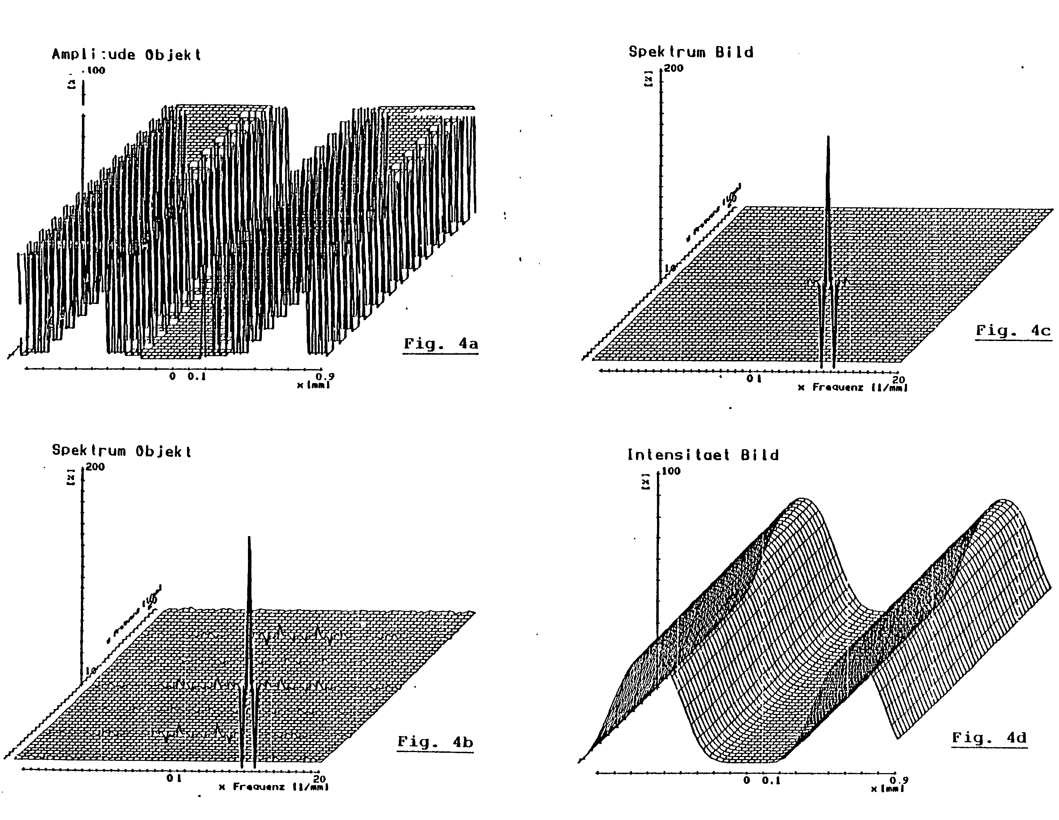

Fig. 4 zeigt die verschiedenen Verteilungen, die man mit der in Fig. 2a dargestellten Projektionseinrichtung erhält, wenn man die Dreiecke mit einer Höhe von 88 % bei einer Höhe von 40 % des halben Abstandes « abschneidet », so daß Trapeze entstehen, die das zweite Modulationsmuster bilden.

Eine derartige Modulationsanordnung hat hinsichtlich der Stabilität des sich drehenden Siemenssterns Vorteile gegenüber einer Anordnung, bei der die einzelnen Radialstreifen ein Modulationsmuster mit « Spitzen » aufweisen.

Fig. 4a zeigt wiederum die Amplituden- bzw. Insitätsverteilung hinter dem Siemensstern 13 bzw. vor dem Objektiv 14, während Fig. 4b das zugehörige Ortsfrequenzspektrum für ein von « Trapezen » gebildetes zusätzliches Modulationsmuster des Siemenssterns zeigt.

Überträgt man wiederum dieses Frequenzspektrum mit dem Objektiv 14, dessen Übertragungsfunktion in geeigneter Weise frequenzbeschränkt ist, so erhält man im Bildraum das in Fig. 4c dargestellte Ortsfrequenzspektrum, bei dem ebenfalls praktisch nur die nullte und erste Ordnung auftreten.

Dieses Frequenzspektrum führt zu dem in Fig. 4d dreidimensional dargestellten Intensitätsspektrum im Bildraum 15.

Wie man sieht, erhält man mit der erfindungsgemäßen Modulationsanordnung Intensitätsspektren im Bildraum, bei denen lediglich Einzelmaxima auftreten, so daß das zu leitende Objekt ohne weiteres die Frequenz und hieraus den Standort in einer Ebene senkrecht zur Achse des Leitstrahls, d. h. zur Verlängerung der optischen Achse 17 des Objektivs bestimmen kann.

Dieser erfindungsgemäße Intensitätsverlauf läßt sich streng dadurch erreichen, daß das erste Modulationsmuster graduell verlaufend ausgebildet wird, anstelle daß vollständig lichtundurchlässige und praktisch vollständig lichtdurchlässige Gebiete verwendet werden, die von Trennkanten getrennt sind.

Vor allem aber ist erfindungsgemäß erkannt, daß sich ein in der Praxis ausreichender Intensitätsverlauf im Bildraum auch dann ergibt, wenn die Radialstrahlen des Siemenssterns mit einem zweiten Modulationsmuster versehen werden, dessen Ortsfrequenz wesentlich größer als die Ortsfrequenz der Radialstrahlen des Siemenssterns ist, und ein Objektiv verwendet wird, dessen Übertragungsfunktion in geeigneter Weise frequenzbeschränkt ist : Durch das zweite Modulationsmuster werden die zweite bis fünfte Ordnung des Frequenzspektrums wirkungsvoll unterdrückt, während das frequenzbeschränkte Objektiv höhere Ordnungen « abschneidet ».

Diese erfindungsgemäße Ausbildung der Projektionseinrichtung, bei der der graduelle Verlauf mittels eines zweiten Modulationsmusters nachgebildet wird, hat nicht nur den Vorteil, daß sie einfach herzustellen ist, sondern auch insbesondere dann, wenn mit Licht im langwelligen Infrarotbereich gearbeitet wird, den zusätzlichen Vorteil, daß sich der Siemensstern nur wenig aufheizt.

Vorstehend ist die erfindungsgemäße Modulationsanordnung anhand spezieller Beispiele beschrieben worden. Es ist selbstverständlich, daß im Rahmen des allgemeinen Erfindungsgedankens die verschiedensten Modifikationen und Abwandlungen möglich sind :

Beispielsweise sind die dargestellten Ausführungsbeispiele für den Einsatz mit einem $CO_2$-Laser als Lichtquelle gedacht. Es versteht sich von selbst, daß die erfindungsgemäße Projektionseinrichtung so modifiziert werden kann, daß sie auch mit Licht anderer Wellenlängen betrieben werden kann.

## Patentansprüche

1. Projektionseinrichtung für einen Leitstrahl, bei der ein Objektiv (14) einen Teilbereich eines Siemenssterns (13), den eine Lichtquelle (11) beleuchtet, und der um eine Drehachse (16) rotiert, die sich wiederum um die Achse (17) des Leitstrahls drehen kann, in einen Raum (15) projiziert, so daß ein zu leitendes Objekt aus der jeweiligen Modulationsfrequenz des Leitstrahls seine Lage in einer zur Achse (17) des Leitstrahls senkrechten Ebene ermittelt, dadurch gekennzeichnet, daß zum Unterdrücken höherer Ordnungen als der ersten Ordnung die Trennkanten zwischen den den Lichtstrahl praktisch nicht beeinflußenden (1, 1') und den den Lichtstrahl beeinflußenden Radialstrahlen (2) des Siemenssterns (13) ein in radialer Richtung verlaufendes zweites Modulationsmuster aufweisen, dessen Ortsfrequenz zum Nachbilden eines graduellen Verlaufs größer als die Ortsfrequenz der Radialstrahlen des Siemenssterns ist.

2. Einrichtung nach Anspruch 1, dadurch gekennzeichnet, daß das zweite Modulationsmuster sägezahnförmig oder dreiecksförmig ist.

3. Einrichtung nach Anspruch 1, dadurch gekennzeichnet, daß das zweite Modulationsmuster trapezförmig ist.

4. Einrichtung nach Anspruch 1, dadurch gekennzeichnet, daß das zweite Modulationsmuster einen Arcsin-Verlauf hat.

5. Einrichtung nach Anspruch 1, dadurch gekennzeichnet, daß das zweite Modulationsmuster einen Sinus-Verlauf hat.

6. Einrichtung nach Anspruch 1, dadurch gekennzeichnet, daß das zweite Modulationsmuster einen $sin^2$-Verlauf hat.

## Claims

1. A projection device for a guide beam where a lens (14) projects a partial area of a sector star (13) rotating round a rotation axis (16) and illuminated by a light source (11) into a space (15) so that an object to be guided can determine its position in a plane perpendicular to the axis (17) of the guide beam from the individual modulation frequency of the projection light beam, characterised by the fact that to suppress higher orders than the first order, the dividing edges between the radial beams of the sector star (13) which parctically have no influence on the light beam (radial beams 1, 1') and those radial beams (2) which affect the light beam have a second modulation pattern in a radial direction, whose local frequency for simulating a graduated design is higher than the local frequency of the radial beams of the sector star.

2. A device according to claim 1, characterised by the fact that the second modulation pattern is saw-tooth-shaped or triangle-shaped.

3. A device according to claim 1, characterised by the fact that the second modulation pattern is trapezium-shaped.

4. A device according to claim 1, characterised by the fact that the second modulation pattern has an arc-sine course.

5. A device according to claim 1, characterised by the fact that the second modulation pattern has a sine course.

6. A device according to claim 1, characterised by the fact that the second modulation pattern has a $sine^2$ course.

**Revendications**

1. Système de projection pour un rayon de guidage, dans lequel un objectif (14) projette un secteur d'une étoile Siemens (13), illuminée par une source lumineuse (11) et tournante autour d'un axe de rotation (16) qui, à son tour, peut tourner autour de l'axe (17) du rayon de guidage, dans un espace (15) d'une façon qu'un objet à guider établit sa position dans un plan vertical relativement à l'axe (17) du rayon de guidage, à la base de la fréquence de modulation respective du rayon de guidage, caractérisé ce que les arêtes de séparation entre les bandes (1, 1') qui n'ont pratiquement aucune influence sur le rayon lumineux, et les rayons radiaux (2) qui influent le rayon lumineux de ladite étoile Siemens (13), sont pourvues d'une deuxième structure de modulation qui s'étend radialement et dont la fréquence de lieu pour la reproduction d'une allure graduelle est supérieure à la fréquence de lieu des rayons radiaux de l'étoile Siemens, afin de supprimer des ordres supérieurs au premier ordre.

2. Système selon la Revendication 1, caractérisé en ce que la deuxième structure de modulation est en dents de scie ou triangulaire.

3. Système selon la Revendication 1, caractérisé en ce que la deuxième structure de modulation est trapézoïdale.

4. Système selon la Revendication 1, caractérisé en ce que la deuxième structure de modulation présente une allure d'arc sinus.

5. Système selon la Revendication 1, caractérisé en ce que la deuxième structure de modulation présente une allure sinusoïdale.

6. Système selon la Revendication 1, caractérisé en ce que la deuxième structure de modulation présente une allure de $sin^2$.

Amplitude Objekt

Fig. 1a

Spektrum Objekt

Fig. 1b

Spektrum Bild

Fig. 1c

Intensitaet Bild

Fig. 1d

EP 0 191 079 B1

Fig. 2 a

Fig. 2 b

Fig. 3a

Fig. 3b

Fig. 3c

Fig. 3d

Amplitude Objekt

Spektrum Objekt

Spektrum Bild

Intensitaet Bild

Fig. 4c

Spektrum Bild

Fig. 4d

Intensitaet Bild

Fig. 4a

Amplitude Objekt

Fig. 4b

Spektrum Objekt

4